# EUROPEAN PATENT APPLICATION

(11) **EP 0 559 999 A1**
(43) Date of publication of application: **15.09.1993**
(21) Application number: 92830591.1
(22) Date of filing: 30.10.1992
(51) Int. Cl.: B60B 17/00

(54) **Damping device for damping railroad and underground railroad train wheels and rail vehicle wheels in general**

(30) Priority: 07.11.1991 IT MI912959
(71) Applicant: FIP INDUSTRIALE S.P.A., I-35050 Selvazzano Dentro (Padova) (IT)
(72) Inventor: Rouget De Gourcez, Etienne, I-35050 Selvazzano Dentro (Padova) (IT)
(74) Representative: Cicogna, Franco

(57) **Abstract**

The present invention relates to a damping device for damping railroad and underground railroad train wheels and rail vehicle wheels in general, characterized in that the device comprises a first and second half-rings (10,11), having an angular configuration cross section and made of a metal material, the half-rings being glued on the outer side of the wheel through the interposition of a viscoelastic material layer (2), ring coupling means being moreover provided for coupling the half-rings.

## Description

### BACKGROUND OF THE INVENTION

The present invention relates to a damping device for damping railroad and underground railroad train wheels and rail vehicle wheels in general.

As is known, a main problem associated with rail vehicles is that of reducing the noise or chirping of the wheels of these vehicles, in particular the chirping of wheels of underground trains, trams and the like, especially at the rail bends.

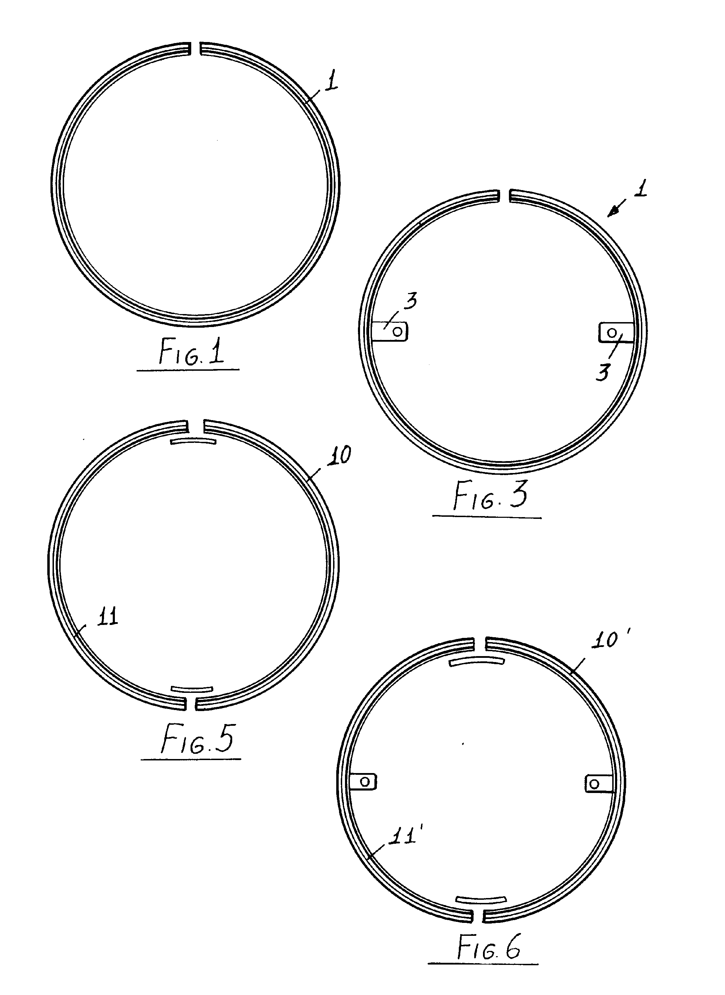

In order to solve this problem there have been already provided sound damping devices, which substantially comprise a ring 1 of the type shown by a top plan view in Figure 1 and by a cross-sectional view in Figure 2, by interposing a viscoelastic material layer 2 having any suitable nature and thickness.

The coupling of the ring on the wheel is obtained by a glue, or structural adhesive, allowing a firm connection and a good operation.

As shown in Figures 1 and 2, the ring can be arranged in a suitable recess formed on the wheel, and it can be fixed, for example, by means of fixing ears, indicated at 3, as shown in Figures 3 and 4.

The assembling of the rings on the wheel must be necessarily performed with the car in a disassembled condition, in order to access the wheel assembly.

In particular, the rings are mounted by arranging the wheel on a horizontal plane and then applying thereon the ring.

It should be apparent that such a method can not be applied on existing railroad equipment, since the application requires a complete disassembling operation, and, moreover, it is not possible to replace a shop mounted ring and which has been damaged during the train life.

### SUMMARY OF THE INVENTION

Thus, the aim of the present invention is to solve the above mentioned problem, by providing such a damping device which can be easily applied to existing railroad equipment or trains.

Within the scope of the above mentioned aim, a main object of the present invention is to provide such a damping device which can be applied to a railroad car wheel without the need of disassembling any parts of the wheel assembly.

Another object of the present invention is to provide such a damping device for damping railroad and underground railroad train wheels and rail vehicle wheels in general, which is very reliable in operation and can be easily made starting from easily available materials and elements and which, accordingly, is very competitive from a mere economic standpoint.

According to one aspect of the present invention, the above mentioned aim and objects, as well as yet other objects, which will become more apparent hereinafter, are achieved by a damping device for damping railroad and underground railroad train wheels and rail vehicle wheels in general, characterized in that said device comprises a first and second half-rings, having an angular shape cross-section and made of a metal material, said half-rings being glued on the outer side of the wheel through the interposition of a viscoelastic material layer, coupling means being moreover provided for coupling said half-rings to one another.

### BRIEF DESCRIPTION OF THE DRAWINGS

Further characteristics and advantages of the present invention will become more apparent hereinafter, from the following detailed disclosure of some preferred, though not exclusive, embodimentthereof, which are illustrated, by way of an indicative, but not limitative, example, in the figures of the accompanying drawings, where:
Figure 1 is a front view of a prior art embodiment of a damping device for the intended application;
Figure 2 is a cross-sectional view of the ring shown in Figure 1 and applied in a recess of the wheel;
Figure 3 is a top plan view showing a prior art ring element provided with affixing ears;
Figure 4 is a cross-sectional view showing the ring element of Figure 3;
Figure 5 illustrates a front view of the damping device according to the present invention;

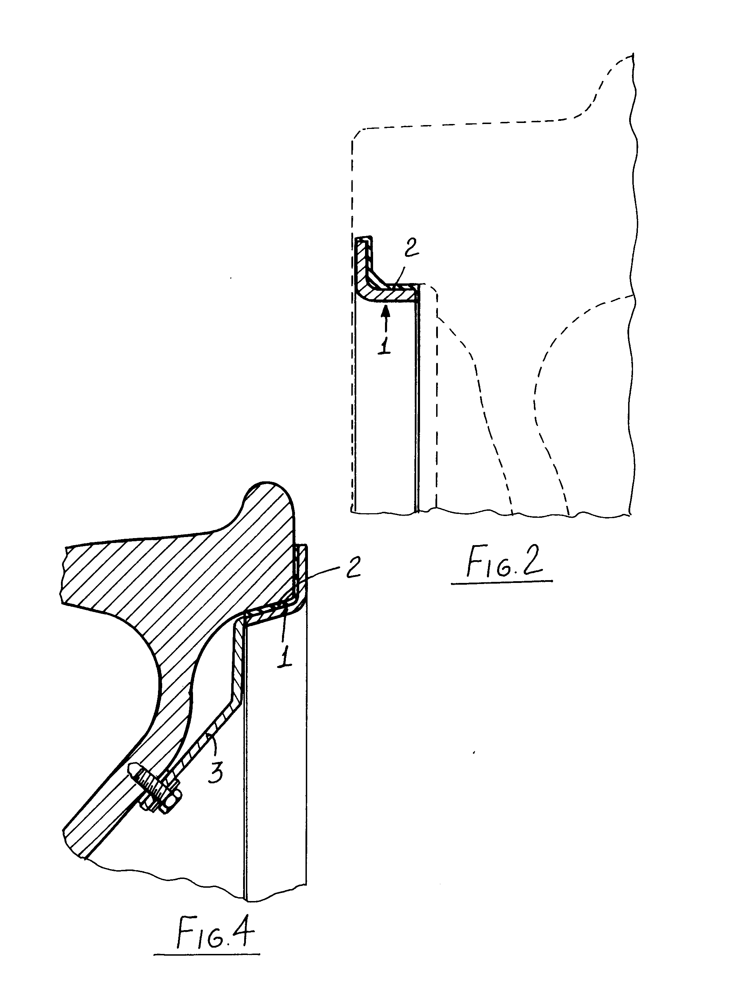

Figure 6 is a further front view illustrating the damping device according to the invention, provided with fixing ears;
Figure 7 is a schematic exploded perspective view illustrating the coupling of two half-ring elements, by means of a pre-shaped plate welded on the legs of the ring elements;
Figure 8 is a further exploded perspective view illustrating the coupling of the two half-rings by means of a welded angular element;
Figure 9 is a further exploded perspective view illustrating the coupling of the half-rings by means of a welded molded or pressed angular element;
Figure 10 is a cross-sectional view illustrating the coupling between the angular element and one of the half-rings;
Figure 11 is a schematic exploded perspective view illustrating a coupling method in which there is used a welded plate;

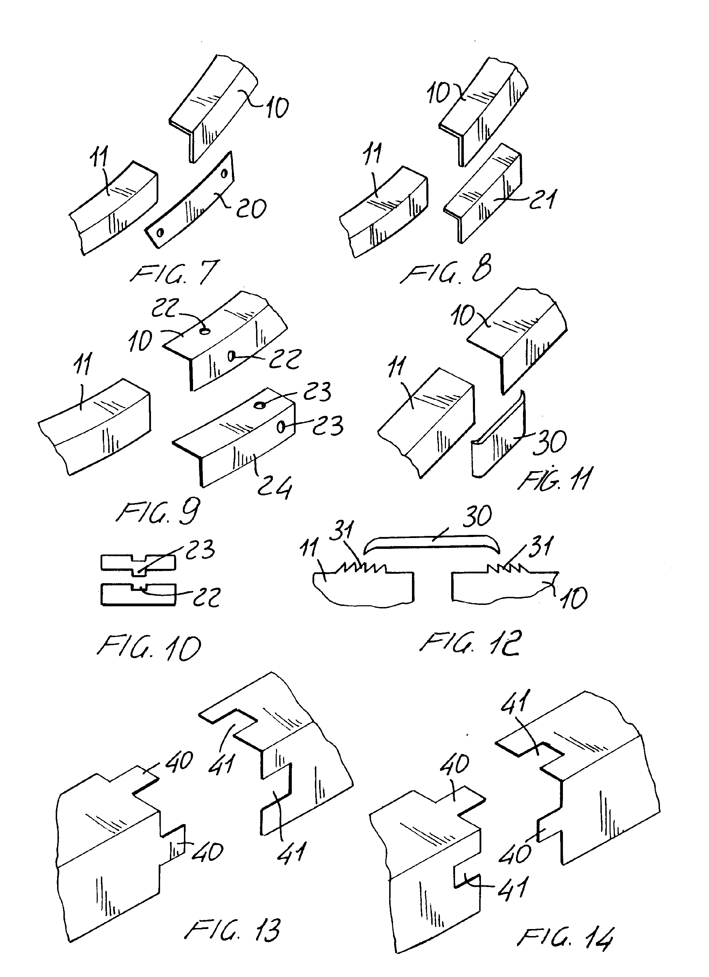

Figure 12 is a schematic cross-sectional view illustrating the coupling of the half-rings by means of a welded-adhering plate; and
Figures 13 and 14 are schematic views illustrating asymmetric shape half-ring having contoured corresponding end portions.

### DESCRIPTION OF THE PREFERRED EMBODIMENT

With reference to the figures of the accompanying drawings, the damping device for damping railroad and underground railroad train wheels and rail vehicle wheels in general according to the present invention comprises a first and second half-rings, indicated respectively at the reference numbers 10 and 11 which, as is schematically shown in Figure 6, can comprise ring elements, indicated at 10' and 11', which can be provided, at a middle portion thereof, with fixing ears.

The half rings have an angular configuration cross-section and are made of any suitable metal material.

More specifically, these half-rings are applied, by glueing, on the outer side or face of the wheel, through the interposition of a viscoelastic layer, providing the damping effect, as it has been already disclosed.

The main advantage provided by the above disclosed construction is that it allows the damping device to be applied also on existing railraod trains, since the typical configuration of the railroad car allows to easily and quickly access the wheel in order to apply, one after the other, the two half-rings.

The two half-rings, in particular, are made rigid with one another by means of coupling means, which are connected at their end portions.

These connecting or coupling means can be of several types.

For example, as is shown in Figure 7, it is possible to use a pre-contoured plate 20, adapted to be directly welded on the legs of the half-rings 10 and 11.

As shown in Figure 8, it is also possible to provide a coupling means comprising an angular element 21, also welded on the half-rings 10 and 11.

As shown in Figure 9, it is moreover possible to provide coupling means using, in combination, a mechanical type of connection and a welded connection.

To that end, on one of the half-rings there are provided holes 22, in particular blind holes, which can be obtained by any suitable pressing operation, and which are provided for receiving centering pin elements 23 formed on a pressed angular element indicated at 24.

The connection can be also performed by means of an adhering or abutting plate 30 provided for being further connected, by welding, at a serrated portion 31 formed on one of the legs of the angular elements 10 and 11.

Finally, at their abutting region, the half-rings can be symmetrical, that is identical on the two end portions, or, as it is exemplarily shown in Figures 13 and 14, it is also possible to provide, on a half-ring, projecting lugs 40 and corresponding recesses 41 in the other half-ring.

According to this embodiment, each half-ring can be provided with two lugs or two recesses (see Figure 13), or it can also be provided with a single lug and a single recess (as is shown in Figure 14).

By using one of the embodiments which have been disclosed, it is possible to easily and quickly assemble the damping device, without the need of locating the wheel on a horizontal plane and without removing said wheel from the car, since the car allows the operator to easily access a half wheel, in order to apply the device, which possibility is not afforded by the prior art damping devices which require that the wheel be disassembled and arranged on a horizontal plane.

Thus, the device according to the invention can be either directly mounted on existing railroad equipment or it can also be used for replacing damaged already installed rings.

The invention as disclosed is susceptible to several variations and modifications all of which will come within the scope of the inventive idea.

Moreover, all of the details can be replaced by other technically equivalent elements.

In practicing the invention, the used materials, provided that they are compatible to the intended use, as well as the contingent shapes and size can be any according to requirements.

## Claims

1. A damping device for damping railroad and underground railroad train wheels and rail vehicle wheels in general, characterized in that said device comprises a first and second half-rings, having an angular shape cross-section and made of a metal material, said half-rings being glued on the outer side of the wheel through the interposition of a viscoelastic material layer, coupling means being moreover provided for coupling said half-rings to one another.

2. A damping device, according to Claim 1, characterized in that each said half-ring is provided, at a middle portion thereof, with fixing ears.

3. A damping device, according to Claims 1 and 2, characterized in that said coupling means comprise a contoured plate to be welded on one of the legs of said oppositedly arranged half-rings.

4. A damping device, according to one or more of the preceding claims, characterized in that said coupling means comprise an angular element welded at opposite end portions of said half-rings.

5. A damping device, according to one or more of the preceding claims, characterized in that said coupling means comprise an angular element provided with centering pins to be engaged in holes provided on one of said half-rings, said angular element having said centering pins being made rigid with said half-ring by means of welding.

6. A damping device, according to one or more of the preceding claims, characterized in that said coupling means comprise a plate abutted on a leg of said half-rings and to be welded at a serrated portion formed on said leg of said half-rings.

7. A damping device, according to one or more of the preceding claims, characterized in that at their opposite end portions said half-rings are provided with at least a lug and a corresponding mating recess.
